# FASCICULE DE BREVET EUROPEEN

(11) **EP 3 799 173 B1**
(45) Date de publication et mention de la délivrance du brevet: **06.04.2022**
(21) Numéro de dépôt: 20198586.8
(22) Date de dépôt: 28.09.2020
(51) Int. Cl.: H01M 8/0223, H01M 8/0258, H01M 8/0202, H01M 8/2418, H01M 8/0256, H01M 8/2483, H01M 8/04089, H01M 8/1018

(54) **PILE A COMBUSTIBLE A PLAQUES DE MAINTIEN DE TYPE PCB COMPORTANT DES COMPARTIMENTS D'ALIMENTATION ET D'EVACUATION EN FLUIDES REACTIFS**
BRENNSTOFFZELLE MIT HALTEPLATTEN VOM LEITERPLATTENTYP MIT ZU- UND ABLEITUNGSKAMMERN FÜR REAKTIVE FLUIDE
FUEL CELL WITH PCB TYPE SUPPORT PLATES COMPRISING COMPARTMENTS FOR SUPPLY AND DRAINAGE OF REACTANT FLUIDS

(30) Priorité: 30.09.2019 FR 1910826
(43) Date de publication de la demande: 31.03.2021
(73) Titulaire: Commissariat à l'Energie Atomique et aux Energies Alternatives, 75015 Paris (FR)
(72) Inventeur: VINCENT, Rémi, 38054 GRENOBLE Cedex 09 (FR); GARNIER, Laurent, 38054 GRENOBLE Cedex 09 (FR); GERARD, Mathias, 38054 GRENOBLE Cedex 09 (FR)
(74) Mandataire: INNOV-GROUP

(56) Documents cités:
- EP-A1- 3 429 006
- DE-A1-102006 035 636
- US-A1- 2004 175 606
- US-A1- 2004 224 190

## Description

### DOMAINE TECHNIQUE

Le domaine de l'invention est celui des piles à combustible, et plus précisément celui des piles à combustible comportant des plaques de maintien de type PCB *(Printed Circuit Board,* en anglais).

### ÉTAT DE LA TECHNIQUE ANTÉRIEURE

Une pile à combustible comporte généralement un empilement de cellules électrochimiques qui comprennent chacune une anode et une cathode séparées électriquement l'une de l'autre par un électrolyte, dans lesquelles a lieu une réaction électrochimique entre deux gaz réactifs qui sont introduits de manière continue. Dans le cas d'une pile à hydrogène, le gaz combustible (hydrogène) est apporté au contact de l'anode, alors que le gaz comburant (oxygène pur ou air) est amené au contact de la cathode. La réaction électrochimique est subdivisée en deux demi-réactions, une oxydation et une réduction, qui ont lieu respectivement à l'interface anode/électrolyte et à l'interface cathode/électrolyte. Elle requiert la présence d'un conducteur ionique entre les deux électrodes, à savoir l'électrolyte, et un conducteur électronique formé par le circuit électrique externe. L'empilement de cellules est le lieu de la réaction électrochimique : les réactifs doivent y être apportés, les produits et les espèces non réactives doivent en être évacués, tout comme la chaleur produite.

La cellule électrochimique comporte habituellement deux plaques de maintien, entre lesquelles est disposé l'assemblage membrane électrodes formé de l'empilement des électrodes et de la membrane électrolytique. Les plaques de maintien, appelées plaques bipolaires dans le cas d'un empilement *(stack,* en anglais) de cellules électrochimiques, sont adaptées à assurer le maintien mécanique de l'assemblage membrane électrodes, la distribution fluidique des gaz réactifs jusqu'aux électrodes, et la connexion électrique de ces dernières.

Ces plaques de maintien peuvent être réalisées à partir de la technologie des circuits imprimés (PCB, pour *Printed Circuit Board,* en anglais). Ainsi, les documents US2005/0202297 et US2004/0224190 décrivent des plaques de maintien de type PCB communes à plusieurs cellules électrochimiques coplanaires et connectées en série. Chaque plaque de maintien comprend une plaque isolante, réalisée en un matériau électriquement isolant, dont une face interne présente des structurations formant les canaux de distribution d'un réseau fluidique. Des bandes électriquement conductrices sont disposées sur la face interne, le long de parois longitudinales qui séparent les canaux de distribution deux à deux, de manière à être au contact de l'assemblage membrane électrode et permettre la polarisation électrique des électrodes. Les bandes conductrices sont reliées à des portions conductrices dont une partie est en saillie hors de la cellule électrochimique, permettant ainsi la connexion électrique des électrodes au circuit électrique externe. Cependant, les électrodes d'un même type (anodes ou cathodes) sont nécessairement disposées d'un même côté de la membrane électrolytique. Chaque fluide réactif est donc distribué jusqu'aux électrodes d'un côté ou de l'autre de la membrane électrolytique.

### EXPOSÉ DE L'INVENTION

L'invention a pour objectif de remédier au moins en partie aux inconvénients de l'art antérieur, et plus particulièrement de proposer une pile à combustible particulièrement compacte, comportant une pluralité de cellules électrochimiques coplanaires à plaques de maintien de type PCB, dont la structure permet d'alimenter les réseaux fluidiques de manière simple tout en restant compacte. Cette structuration des plaques de maintien autorise alors de disposer, sur une même face de la membrane électrolytique, des anodes et des cathodes, simplifiant alors la connexion électrique en série des cellules électrochimiques. Elle autorise également qu'au moins l'une des plaques de maintien comporte un conduit de recirculation ainsi qu'un éjecteur à effet Venturi.

Pour cela, l'objet de l'invention est une pile à combustible destinée à être alimentée en fluides réactifs, comportant plusieurs cellules électrochimiques, coplanaires les unes aux autres, comportant :
- une même membrane électrolytique ;
- des anodes et cathodes, disposées de part et d'autre de la membrane électrolytique, distinctes d'une cellule électrochimique à l'autre ;
- deux mêmes plaques de maintien, disposées de part et d'autre de la membrane électrolytique et au contact des électrodes, comportant chacune une partie dite interne comportant : une plaque isolante dans laquelle sont formées différents réseaux fluidiques comportant des canaux de distribution,

○ chaque réseau fluidique étant destiné à distribuer un fluide réactif à une anode ou cathode,
○ les canaux de distribution d'un même réseau fluidique étant séparés deux à deux par une paroi longitudinale, les parois longitudinales présentant chacune une face d'extrémité ;
○ des portions conductrices de contact s'étendant sur les faces d'extrémité et au contact d'une anode ou cathode.

Chaque plaque de maintien comporte en outre une partie dite externe, disposée sur une face de la partie interne opposée à la membrane électrolytique, comportant au moins deux compartiments, comportant chacun au moins un canal d'alimentation ou d'évacuation d'un fluide réactif communiquant avec les réseaux fluidiques de la partie interne correspondante destinés à distribuer ledit fluide réactif, lesdits compartiments s'étendant de manière parallèle au plan de la membrane électrolytique.

Selon l'invention, une même plaque de maintien peut comporter un conduit de recirculation d'un fluide réactif combustible, communiquant avec le canal d'évacuation situé dans un premier compartiment de la partie externe d'une part, et avec le canal d'alimentation situé dans un deuxième compartiment de la même partie externe d'autre part.

Certains aspects préférés mais non limitatifs de cette pile à combustible sont les suivants.

Les anodes et les cathodes peuvent être agencées en alternance sur une même face de la membrane électrolytique. Chaque partie interne peut comporter des réseaux fluidiques dits anodiques destinés à distribuer un fluide réactif combustible, et des réseaux fluidiques dits cathodiques destinés à distribuer un fluide réactif comburant. Les compartiments d'une même partie externe peuvent comporter un canal d'alimentation et un canal d'évacuation du fluide réactif combustible en communication fluidique avec les réseaux fluidiques anodiques, et un canal d'alimentation et un canal d'évacuation du fluide réactif comburant en communication fluidique avec les réseaux fluidiques cathodiques.

Chaque plaque de maintien peut comporter, dans la partie externe, un premier compartiment comportant un canal d'alimentation du fluide réactif combustible et un canal d'alimentation du fluide réactif comburant, et un deuxième compartiment comportant un canal d'évacuation du fluide réactif combustible et un canal d'évacuation du fluide réactif comburant.

Chaque plaque de maintien peut comporter, dans la partie externe, un premier compartiment comportant un canal d'alimentation du fluide réactif combustible et un canal d'évacuation du fluide réactif comburant, et un deuxième compartiment comportant un canal d'évacuation du fluide réactif combustible et un canal d'alimentation du fluide réactif comburant.

Les canaux d'alimentation et/ou d'évacuation situés dans un même compartiment d'une partie externe peuvent s'étendre de manière parallèle l'un et l'autre, et peuvent être séparés par une paroi de séparation étanche aux fluides réactifs.

La paroi de séparation séparant un canal d'alimentation du fluide réactif combustible du canal d'évacuation du fluide réactif comburant situés le premier compartiment peut être une membrane permettant la diffusion de la vapeur d'eau.

Les anodes peuvent être agencées sur une même face de la membrane électrolytique, et les cathodes être agencées sur la face opposée. Une partie interne d'une même plaque de maintien peut comporter uniquement des réseaux fluidiques dits anodiques destinés à distribuer un fluide réactif combustible, et la partie interne de l'autre plaque de maintien peut comporter uniquement des réseaux fluidiques dits cathodiques destinés à distribuer un fluide réactif comburant. Les compartiments d'une même partie externe peuvent comporter un canal d'alimentation et un canal d'évacuation du fluide réactif combustible en communication fluidique avec les réseaux fluidiques anodiques, et les compartiments de la partie externe de l'autre plaque de maintien peuvent comporter un canal d'alimentation et un canal d'évacuation du fluide réactif comburant en communication fluidique avec les réseaux fluidiques cathodiques.

Le canal d'alimentation en le fluide réactif combustible et le conduit de recirculation peuvent être raccordés fluidiquement par un éjecteur à effet Venturi.

Le canal d'alimentation peut présenter une section de passage Si en amont et aval de l'éjecteur, et présenter une section de passage Se dans l'éjecteur inférieure à Si, et le conduit de recirculation peut être raccordé au canal d'alimentation par un orifice de recirculation présentant une section de passage Sr inférieure à Se.

Le conduit de recirculation peut être situé dans la partie interne ou dans la partie externe de la plaque de maintien.

Dans une même plaque de maintien, la partie externe peut être une partie rapportée et assemblée à la partie interne de manière étanche.

Dans une même plaque de maintien, la partie externe peut être au moins en partie réalisée d'un seul tenant avec la plaque isolante de la partie interne.

Les deux compartiments d'une même plaque de maintien peuvent être disposés de part et d'autre des réseaux fluidiques, suivant l'axe longitudinal de ces derniers.

La partie interne de chaque plaque de maintien peut comporter en outre des vias conducteurs s'étendant au travers de la plaque isolante, connectés aux portions conductrices de contact d'une part, et à des pistes conductrices de polarisation adaptées à appliquer un potentiel électrique aux électrodes, lesdites pistes conductrices de polarisation s'étendant sur une face d'une plaque de maintien opposée à la membrane électrolytique.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
les figures 1A, 1B et 1C sont des vues schématiques et partielles, respectivement de dessus, en coupe suivant le plan A-A et en coupe suivant le plan B-B, d'une pile à combustible selon un premier mode de réalisation dans lequel il y a alternance entre les anodes et les cathodes situées sur une même face de la membrane électrolytique ;
les figures 2A et 2B sont des vues en coupe, schématiques et partielles, d'une pile à combustible selon des variantes de réalisation de la pile à combustible illustrée sur la fig.iC ;
la figure 3 est une vue de dessus, schématique et partielle, d'une pile à combustible selon un deuxième mode de réalisation dans lequel un conduit de recirculation relie le canal d'évacuation en hydrogène au canal d'alimentation en hydrogène ;
la figure 4 est une vue de dessus, schématique et partielle, d'une pile à combustible selon un troisième mode de réalisation, comportant un conduit de recirculation, et dans lequel les anodes sont situées sur une même face de la membrane électrolytique alors que les cathodes sont situées sur la face opposée.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur une pile à combustible comportant une pluralité de cellules électrochimiques distinctes, coplanaires et dont les plaques de maintien disposées de part et d'autre de la membrane électrolytique sont de type PCB *(Printed Circuit Board,* en anglais). Chaque plaque de maintien comporte plusieurs réseaux fluidiques de distribution d'un fluide réactif, adjacents les uns aux autres, et orientés suivant des axes principaux parallèles.

Dans la suite de la description, la pile à combustible est de type PEM *(Proton Exchange Membrane,* en anglais), c'est-à-dire que la membrane électrolytique est une membrane échangeuse de protons. Les fluides réactifs sont ici en phase gazeuse et sont de l'hydrogène côté anode et de l'oxygène côté cathode (oxygène pur ou air). Cependant, il peut également s'agir d'au moins un liquide, par exemple de méthanol.

Comme détaillé par la suite, chaque plaque de maintien comporte une partie dite interne disposée au contact des électrodes situées sur une même face de la membrane électrolytique, cette partie interne étant adaptée à assurer la distribution fluidique d'au moins un même gaz réactif jusqu'aux électrodes. Elle comporte en outre une partie dite externe, assemblée à la partie interne, adaptée à assurer l'alimentation et l'évacuation d'au moins un gaz réactif vis-à-vis des réseaux fluidiques de la partie interne.

Ces plaques de maintien de type PCB présentent alors une structure particulièrement compacte, et autorisent l'alimentation d'une pluralité de cellules électrochimiques distinctes et coplanaires. Les électrodes peuvent avantageusement être disposées de sorte qu'il y ait une alternance d'anodes et de cathodes sur une même face de la membrane électrochimique, ce qui permet de connecter les cellules électrochimiques en série de manière simplifiée. Par ailleurs, au moins l'une des plaques de maintien peut comporter un conduit de recirculation du gaz combustible, par exemple de l'hydrogène, sans que cela nuise à la compacité des plaques de maintien.

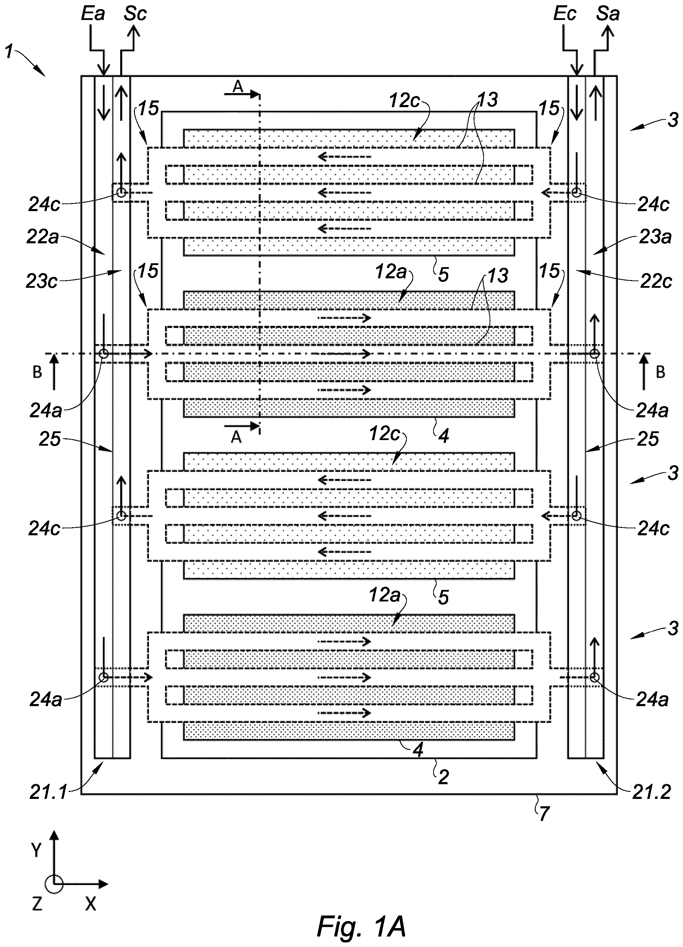

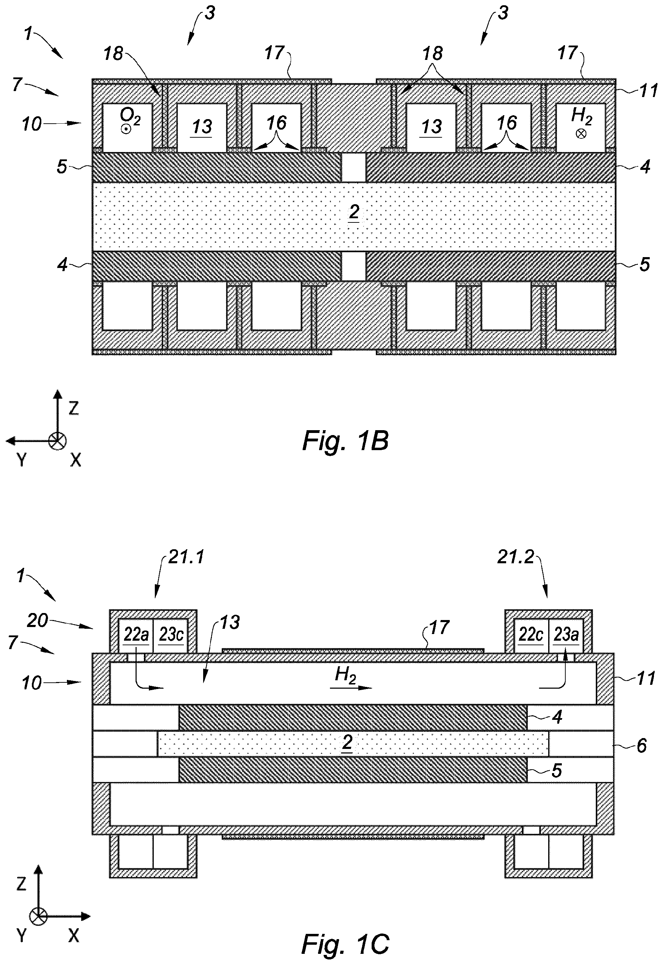

Les figures 1A, 1B et 1C sont des vues, schématiques et partielles, d'une pile à combustible 1 selon un premier mode de réalisation, respectivement de dessus, en coupe suivant le plan A-A, et e coupe suivant le plan B-B. Dans ce mode de réalisation, les électrodes 4, 5 des cellules électrochimiques 3 sont agencées de manière à présenter une alternance d'anodes 4 et de cathodes 5 situées sur une même face de la membrane électrolytique 2, simplifiant ainsi la connexion électrique en série des cellules électrochimiques 3.

On définit ici et pour la suite de la description un repère direct tridimensionnel orthogonal XYZ, où les axes X et Y forment un plan parallèle au plan principal de la membrane électrolytique 2, et où l'axe Z est orienté suivant l'épaisseur des plaques de maintien 7.

La pile à combustible 1 comporte une pluralité de cellules électrochimiques 3 distinctes et coplanaires. Elles sont dites distinctes dans la mesure où elles génèrent chacune un courant électrique qui lui est propre. Les électrodes 4, 5 de chaque cellule électrochimique 3 sont donc distinctes de celles des cellules électrochimiques 3 adjacentes. Elles sont dites coplanaires dans la mesure où elles partagent la même membrane électrolytique 2 ainsi que les mêmes plaques de maintien 7.

Chaque cellule électrochimique 3 comporte ainsi un assemblage membrane électrodes (AME) formé de la membrane électrolytique 2 et d'électrodes 4, 5 comportant des couches actives adaptées à réaliser les demi-réactions d'oxydation et de réduction des gaz réactifs. Deux plaques de maintien 7 de type PCB sont disposées de part et d'autre de la membrane électrolytique 2, et assurent la distribution fluidique des gaz réactifs jusqu'aux électrodes 4, 5, en reliant un collecteur d'entrée Ea, Ec au collecteur de sortie correspondant Sa, Sc, et participent à la circulation des électrons générés.

Plus précisément, les AME des cellules électrochimiques 3 comportent une même membrane électrolytique 2, laquelle sépare l'anode 4 de la cathode 5 de chaque cellule électrochimique 3. Elle permet la diffusion de protons (par ex. sous forme d'ions H₃O+) d'une anode 4 jusqu'à la cathode 5 d'une même cellule électrochimique 3. Elle est de préférence monolithique et réalisée en un même matériau.

Chaque cellule électrochimique 3 comporte une anode 4, en contact de la membrane électrolytique 2, qui reçoit de l'hydrogène par des canaux de distribution 13. L'anode 4 comporte une couche active adaptée à réaliser l'oxydation de l'hydrogène, contenant un catalyseur favorisant cette réaction électrochimique. De même, chaque cellule électrochimique 3 comporte une cathode 5, en contact de la membrane électrolytique 2 et disposée en regard de l'anode 4, qui reçoit de l'oxygène par des canaux de distribution 13. La cathode 5 comporte une couche active adaptée à réaliser une réaction de réduction produisant de l'eau à partir de l'oxygène introduit, et de protons et d'électrons provenant de l'anode 4. Elle comporte également un catalyseur favorisant cette réaction électrochimique. Les anodes 4 et les cathodes 5 sont distinctes les unes des autres, c'est-à-dire qu'elles ne sont pas en contact mutuel et sont électriquement isolées les unes des autres dans le plan de la membrane électrolytique 2.

La pile à combustible 1 comporte un circuit électrique de distribution (non représenté) qui connecte l'anode 4 à la cathode 5 d'une même cellule électrochimique 3, et autorise la circulation des électrons entre ces deux électrodes 4, 5, et fournit le courant électrique à une charge électrique. Il assure la connexion en série et/ou en parallèle des cellules électrochimiques 3.

Dans ce premier mode de réalisation, plusieurs cellules électrochimiques 3 sont agencées de sorte qu'il y ait une alternance, sur une même face de la membrane électrolytique 2, d'anodes 4 et de cathodes 5. Autrement dit, sur une même face de la membrane électrolytique 2, une anode 4 est adjacente à au moins une cathode 5, et inversement. Dans cette configuration, les cellules électrochimiques 3 sont avantageusement connectées électriquement en série. Cette connexion en série est rendue particulièrement simple puisqu'il suffit de connecter une anode 4 à la cathode coplanaire 5 adjacente.

D'une manière générale, chaque plaque de maintien 7 est alors adaptée à fournir au moins un gaz réactif aux réseaux fluidiques 12 situés du même côté de la membrane électrolytique 2, et dans ce premier mode de réalisation, est adaptée à distribuer les deux gaz réactifs d'un même côté de la membrane électrolytique 2. Pour cela, chaque plaque de maintien 7 comporte :
- une partie interne 10, au contact des électrodes 4, 5 et comportant des réseaux fluidiques 12 à canaux de distribution 13 permettant de distribuer au moins l'un des gaz réactifs directement aux électrodes 4, 5, et adaptée à appliquer un potentiel électrique distinct aux électrodes 4, 5 d'une cellule électrochimique 3 à l'autre,
- une partie externe 20, destinée à assurer l'alimentation et l'évacuation d'au moins un gaz réactif vis-à-vis des réseaux fluidiques 12, et comportant ainsi des canaux d'alimentation et d'évacuation communiquant avec les réseaux fluidiques 12.

La partie interne 10 de distribution comporte une même plaque isolante 11, laquelle est de préférence monolithique et réalisée en un matériau électriquement isolant, par exemple de la résine époxy ou du polyimide, voire un polymère fluoré, le poly(naphtalate d'éthylène) (PEN) ou encore le poly(téréphtalate d'éthylène) (PET). La plaque isolante 11 s'étend en regard des électrodes 4, 5 situées sur une même face de la membrane électrolytique 2.

La plaque isolante 11 présente une face externe et une face interne opposée l'une à l'autre suivant l'axe d'épaisseur de la plaque. La face interne est orientée vers la membrane électrolytique 2, et comporte des structurations définissant les réseaux fluidiques 12 des différentes cellules électrochimiques 3. Les réseaux fluidiques 12 sont chacun formés de plusieurs canaux de distribution 13 séparés deux à deux par une paroi longitudinale 14 de la plaque isolante 11, dont la face d'extrémité est en appui contre une électrode 4, 5. Les réseaux fluidiques 12 des différentes cellules électrochimiques 3 d'une même plaque de maintien 7 sont sensiblement coplanaires. Les réseaux fluidiques 12 d'une même plaque de maintien 7 sont adjacents deux à deux et sont orientés suivant des axes principaux sensiblement parallèles, ici suivant l'axe X.

Comme l'illustre la fig.iC, un renfort latéral 6 délimite latéralement l'assemblage membrane électrodes, dans le plan XY. Les plaques de maintien 7 sont ici au contact également du renfort latéral 6. Un joint étanche peut également être présent entre les plaques de maintien 7 et le renfort latéral 6.

Dans ce premier mode de réalisation, la partie interne 10 d'une même plaque de maintien 7 comporte une pluralité de réseaux fluidiques 12 adaptée à distribuer les deux gaz réactifs aux différentes électrodes 4, 5 situées sur une même face de la membrane électrolytique 2. Aussi, elle comporte des réseaux fluidiques 12a dits anodiques, c'est-à-dire adaptés à distribuer ici de l'hydrogène aux anodes 4 situées sur une même face de la membrane électrolytique 2, et des réseaux fluidiques 12c dits cathodiques, c'est-à-dire adaptés à distribuer ici de l'air aux cathodes 5 situées sur cette même face de la membrane électrolytique 2. Aussi, une même plaque de maintien 7 comporte, dans sa partie interne 10, des réseaux fluidiques anodiques 12a adjacents à des réseaux fluidiques cathodiques 12c, ici agencés en alternance.

Comme décrit plus loin, les réseaux fluidiques anodiques 12a sont reliés fluidiquement à un même canal d'alimentation 22a en hydrogène et à un même canal d'évacuation 23a de l'hydrogène non consommé. De même, les réseaux fluidiques cathodiques 12c sont reliés fluidiquement à un même canal d'alimentation 22c en air et à un même canal d'évacuation 23c.

Dans cet exemple, un même réseau fluidique 12 comporte deux canaux d'extrémité 15, situés en ses extrémités longitudinales. Chaque canal d'extrémité 15 relie fluidiquement les canaux de distribution 13 à un canal d'alimentation 22a, 22c ou d'évacuation 23a, 23c situé dans la partie externe 20. Ce canal d'extrémité 15 comporte ici une partie qui s'étend suivant l'axe X, et une partie qui s'étend suivant l'axe Y et relie tous les canaux de distribution 13 d'un même réseau fluidique 12. D'autres agencements sont possibles. Ainsi, le canal d'extrémité 15 peut ne pas être présent de sorte que chaque canal de distribution 13 s'étend jusqu'à un canal d'alimentation 22 et/ou jusqu'à un canal d'évacuation 23, et donc jusqu'à des orifices 24. En variante, le canal d'extrémité 15 peut être présent mais peut n'être formé que d'un conduit orienté suivant l'axe Y et situé sous un canal d'alimentation 22 ou d'un canal d'évacuation 23.

Pour permettre de collecter le courant électrique généré par chaque cellule électrochimique 3, les faces d'extrémité des parois longitudinales 14 sont revêtues par des portions conductrices de contact 16. Ainsi, les portions conductrices de contact 16, au contact d'une même anode 4, sont connectées à une même piste conductrice de polarisation 17 qui s'étend sur une face de la plaque de maintien 7 opposée à la membrane électrolytique 2, ici la face externe de la plaque isolante 11. La piste conductrice de polarisation 17 est connectée aux portions conductrices de contact 16 par des vias conducteurs 18 qui s'étendent au travers de la plaque isolante 11, et notamment au travers des parois longitudinales 14. Les pistes conductrices de polarisation 17 qui s'étendent sur une même face externe de la plaque isolante 11 sont électriquement séparées l'une de l'autre.

Les différentes pistes conductrices de polarisation 17 peuvent être électriquement connectées à une ou plusieurs puces de commande (non représentées), et sont adaptées à assurer la mise en série ou en parallèle des différentes cellules électrochimiques 3, permettant ainsi de réguler la puissance électrique délivrée par la pile à combustible 1.

La partie externe 20 de chaque plaque de maintien 7 est assemblée à la partie interne 10 de distribution, et ici est située sur la face externe de la partie interne 10. Elle comporte au moins deux compartiments 21, réalisés en un matériau isolant de préférence identique à celui de la plaque isolante 11 de la partie interne 10, et disposés aux extrémités des réseaux fluidiques 12. Les compartiments 21 s'étendent de manière parallèle au plan de la membrane électrolytique 2.

Chaque compartiment 21 comporte au moins un canal d'alimentation 22 ou d'évacuation 23. Dans ce premier mode de réalisation où chaque plaque de maintien 7 alimente des réseaux fluidiques anodiques 12a et cathodiques 12c situés dans la partie interne 10, chaque compartiment 21 comporte deux canaux, soit deux canaux d'alimentation ou d'évacuation, soit un canal d'alimentation et un canal d'évacuation.

Dans cet exemple où les gaz réactifs circulent à contre-courant dans un même compartiment 21, le premier compartiment 21.1 comporte un canal d'alimentation 22a en hydrogène et un canal d'évacuation 23c d'air, et le deuxième compartiment 21.2 comporte un canal d'alimentation 22c en air et un canal d'évacuation 23a d'hydrogène. Les canaux d'alimentation et/ou d'évacuation de chaque compartiment 21 s'étendent longitudinalement de manière parallèle l'un à l'autre, et sont séparés l'un de l'autre par une paroi de séparation 25 étanche aux gaz réactifs. De préférence, la paroi de séparation 25 est une membrane de séparation fluidique qui autorise seulement la diffusion de vapeur d'eau d'un canal à l'autre. Cette membrane est avantageuse lorsqu'un même compartiment 21 comporte un canal d'évacuation 23c d'air chargé alors d'humidité et un canal d'alimentation 22a en hydrogène. L'hydrogène introduit dans les réseaux fluidiques anodiques 12a présente alors une humidité augmentée, ce qui permet de préserver les performances électrochimiques de la pile à combustible 1 (via l'humidification de la membrane).

Un même canal d'alimentation 22c en air et un même canal d'évacuation 23c en air communiquent fluidiquement avec l'ensemble des réseaux fluidiques cathodiques 12c d'une même plaque de maintien 7, ceci par des orifices dits cathodiques 24c traversant la plaque isolante 11. De même, un même canal d'alimentation 22a en hydrogène et un même canal d'évacuation 23a en hydrogène communiquent fluidiquement avec l'ensemble des réseaux fluidiques anodiques 12a d'une même plaque de maintien 7, ceci par des orifices anodiques 24a traversant la plaque isolante 11.

Dans cet exemple, les gaz réactifs s'écoulent à contre-courant dans chaque compartiment 21. En variante, ils peuvent s'écouler en co-courant, auquel cas un premier compartiment 21.1 comporte les canaux d'alimentation 22c, 22a en air et en hydrogène, et le deuxième compartiment 21.2 comporte les canaux d'évacuation 23c, 23a d'air et d'hydrogène.

Dans cet exemple, les collecteurs d'entrée d'hydrogène Ea et de sortie d'air Sc sont adjacents l'un à l'autre et disposés du même côté des cellules électrochimiques 3 suivant l'axe Y, tout comme le sont les collecteurs d'entrée d'air Ec et de sortie d'hydrogène Sa. Cependant, d'autres agencements sont bien entendu possibles, comme le fait que le collecteur d'entrée d'hydrogène Ea est disposé d'un côté des cellules électrochimiques 3 suivant l'axe Y (ici en haut de la fig.iA), alors que le collecteur de sortie d'air Sc est disposé de l'autre côté (ici en bas de la fig.iA). L'entrée du canal d'alimentation 22 en hydrogène et la sortie du canal d'évacuation 23 d'air sont donc opposées l'une à l'autre suivant ici l'axe Y.

La pile à combustible 1 selon ce premier mode de réalisation présente ainsi une pluralité de cellules électrochimiques 3 coplanaires dont les plaques de maintien 7 sont de type PCB. L'alimentation et l'évacuation des gaz réactifs vis-à-vis des différents réseaux fluidiques 12 disposés dans une même plaque de maintien 7 sont réalisées dans une structure particulièrement compacte. De plus, les anodes 4 et les cathodes 5 étant disposées en alternance sur une même face de la membrane électrolytique 2, chaque plaque de maintien 7 permet d'alimenter les réseaux fluidiques 12a, 12c en les deux gaz réactifs tout en restant particulièrement compact. La connexion électrique en série des cellules électrochimiques 3 est alors possible de manière simplifiée, dans la mesure où il n'est pas nécessaire de réaliser des reprises de contact électrique entre les deux côtés de la membrane électrolytique 2.

Dans l'exemple illustré sur la fig.iC, la partie externe 20 est une partie distincte de la partie interne 10, ici une partie rapportée puis fixée à la partie interne 10, par exemple au moyen d'une colle étanche. De plus, les compartiments 21 d'une même plaque de maintien 7 sont distincts l'un de l'autre, de sorte que la partie externe 20 ne recouvre donc que partiellement la partie interne 10 dans le plan XY. Les pistes conductrices de polarisation 17 sont donc disposées sur la face externe de la plaque isolante 11 de la partie interne 10. D'autres variantes sont possibles.

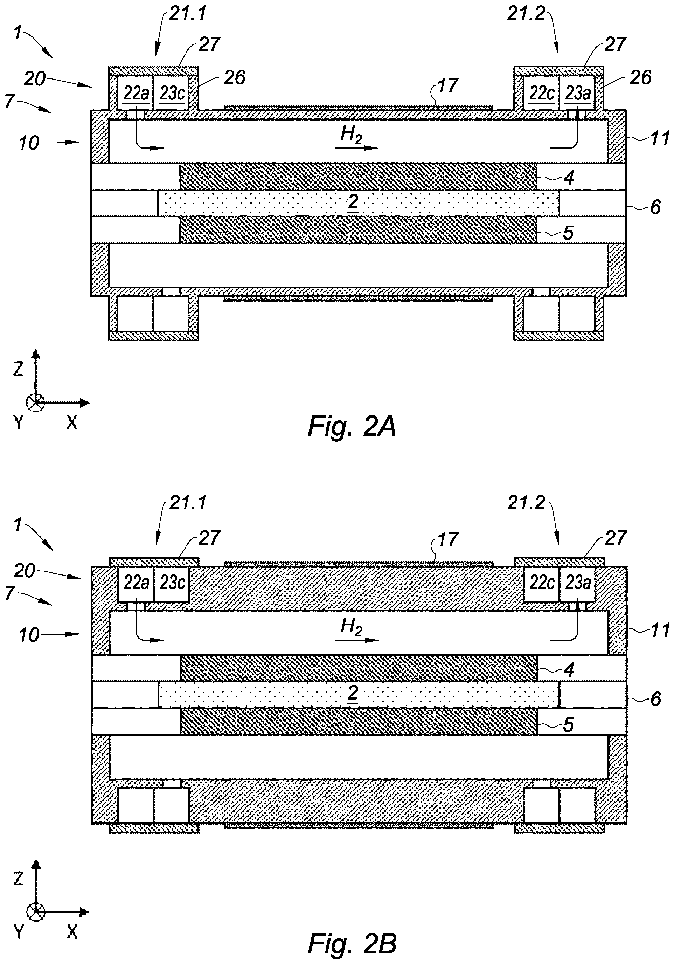

A ce titre, les figures 2A et 2B sont des vues en coupe suivant le plan B-B, schématiques et partielles, de deux variantes de réalisation de la pile à combustible 1 illustrée sur la fig.iC.

Dans l'exemple de la fig.2A, chaque compartiment de la partie externe 20 comporte des parois latérales 26 réalisées d'un seul tenant avec la plaque isolante 11 de la partie interne. Une paroi supérieure 27 délimite de manière étanche les canaux d'alimentation et d'évacuation 22, 23 suivant l'axe Z. Elle est une pièce rapportée et assemblée aux parois latérales 26, par exemple par une colle étanche. Dans cet exemple, la partie externe 20 ne recouvre que partiellement la partie interne 10, de sorte que les pistes conductrices de polarisation 17 sont donc disposées sur la face externe de la plaque isolante 11 de la partie interne 10.

Dans l'exemple de la fig.2B, la plaque isolante 11 de la partie interne 10 délimite les canaux d'alimentation et d'évacuation 22, 23 de la partie externe 20 dans le plan XY. La partie externe 20 est réalisée d'un seul tenant avec la partie interne 10, et recouvre entièrement cette dernière. Une paroi supérieure 27 est assemblée à la partie externe 20 et délimite suivant l'axe Z de manière étanche les canaux d'alimentation et/ou d'évacuation 22, 23. Les pistes conductrices de polarisation 17 sont ici disposées sur la face externe de la partie externe 20.

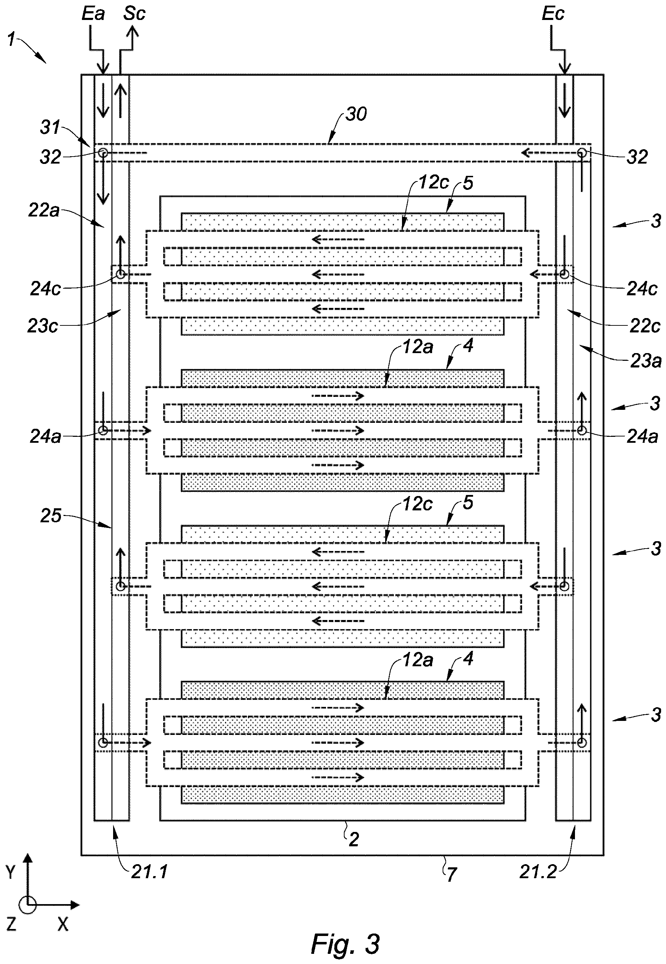

La figure 3 est une vue de dessus, schématique et partielle, d'une pile à combustible 1 selon un deuxième mode de réalisation, qui diffère ici essentiellement du premier mode de réalisation en ce que chaque plaque de maintien 7 comporte un conduit de recirculation 30 disposé dans la partie interne 10 correspondante. Dans ce deuxième mode de réalisation, comme dans le premier mode, il y a alternance d'anodes 4 et de cathodes 5 sur une même face de la membrane électrolytique 2.

Dans ce cas, la pile à combustible 1 fonctionne de préférence en mode ouvert avec recirculation de l'hydrogène. Ainsi, lorsqu'on alimente la pile à combustible 1 en surstoechiométrie d'hydrogène (rapport supérieur à 1 entre la quantité d'hydrogène injecté et la quantité d'hydrogène consommé), l'hydrogène sortant présente un débit suffisant pour évacuer l'eau produite par la réaction, qui peut ensuite être collectée à l'aide d'un séparateur de phase. Pour éviter de perdre l'hydrogène non consommé, le conduit de recirculation 30 permet de réinjecter l'hydrogène non consommé en entrée de pile. Ce fonctionnement en mode ouvert se distingue ainsi d'un fonctionnement en mode bouché *(dead-end,* en anglais) où la sortie de l'anode est obturée, le rapport stoechiométrique étant égal à 1 environ.

La boucle de recirculation comporte ici un éjecteur 31 reliant le canal d'alimentation 22 en hydrogène et le conduit de recirculation 30. Dans cet exemple, l'éjecteur 31 est formé par une modification locale de la section de passage du canal d'alimentation 22a et du conduit de recirculation 30, comme détaillé plus loin, de manière à générer une aspiration d'hydrogène par effet Venturi. L'éjecteur 31 est disposé entre le collecteur d'entrée d'hydrogène Ea et le premier orifice anodique 24a du compartiment 21 comportant le canal d'alimentation 22a en hydrogène.

Un premier compartiment 21.1 de la partie externe 20 comporte le canal d'alimentation 22a en hydrogène et le deuxième compartiment 21.2 comporte le canal d'évacuation 23a d'hydrogène. L'entrée du canal d'alimentation 22a et la sortie du canal d'évacuation 23a sont disposées du même côté des cellules électrochimiques 3 suivant l'axe Y (ici en haut de la fig.3).

La partie interne 10 comporte alors le conduit de recirculation 30, qui s'étend entre la sortie du canal d'évacuation 23a et l'éjecteur 31 du canal d'alimentation 22a. Le conduit de recirculation 30 est relié fluidiquement aux canaux d'évacuation 23a et d'alimentation 23c par des orifices de recirculation 32 pratiqués dans la plaque isolante 11.

Ainsi, l'hydrogène sortant des réseaux fluidiques anodiques 12a situés dans la partie interne 10, rejoint le canal d'évacuation 23a situé dans la partie externe 20 par les orifices anodiques 24a. Il s'écoule dans le canal d'évacuation 23a, ici suivant la direction +Y, puis rejoint le conduit de recirculation 30 situé dans la partie interne 10 via l'orifice de recirculation 32. Il s'écoule dans le conduit de recirculation 30, ici suivant la direction -X, puis rejoint le canal d'alimentation 22a situé dans la partie externe 20 via l'orifice de recirculation 32.

De manière à aspirer l'hydrogène circulant dans le conduit de recirculation 30, l'éjecteur 31 forme un dispositif à effet Venturi. Autrement dit, l'éjecteur 31 comporte une entrée primaire et une sortie formées par le canal d'alimentation 22a, ainsi qu'une entrée secondaire formée par le conduit de recirculation 30, et plus précisément ici par l'orifice de recirculation 32. L'éjecteur 31 comporte différentes valeurs de section de passage fluidique, de sorte que l'hydrogène à l'entrée primaire est un fluide moteur, et que l'hydrogène à l'entrée secondaire est le un fluide aspiré. Le fluide moteur, par son débit, provoque par effet Venturi l'écoulement de l'hydrogène dans le conduit de recirculation 30, qui se mélange ensuite avec le fluide moteur avant de s'écouler dans le canal d'alimentation 22a.

Aussi, le canal d'alimentation 22a présente un rétrécissement localisé de sa section de passage fluidique au niveau de l'orifice de recirculation 32, de Si à Sₑ, avec par exemple Sₑ sensiblement égal à la moitié de Si. La section de passage du canal d'alimentation 22a est alors égale à Si en amont et en aval de l'éjecteur 31. Par ailleurs, la section fluidique de passage de l'orifice de recirculation 32 Sᵣ est inférieure à Sₑ, par exemple est sensiblement égal à la moitié de Sₑ. Ainsi, l'hydrogène circulant dans le canal d'alimentation 22a est accéléré au niveau de l'orifice de recirculation 32, et forme donc un fluide moteur qui permet d'aspirer, par effet Venturi, l'hydrogène circulant dans le conduit de recirculation 30.

En variante, le conduit de recirculation 30 peut être disposé dans la partie externe 20 de la plaque de maintien 7, et non pas dans la partie interne 10. Dans l'exemple de la fig.3, les canaux 22a et 23a sont alors disposés vers la zone centrale de la plaque de maintien 7 suivant l'axe X, alors que les canaux 22c et 23c sont disposés vers les bordures latérales de la plaque de maintien 7.

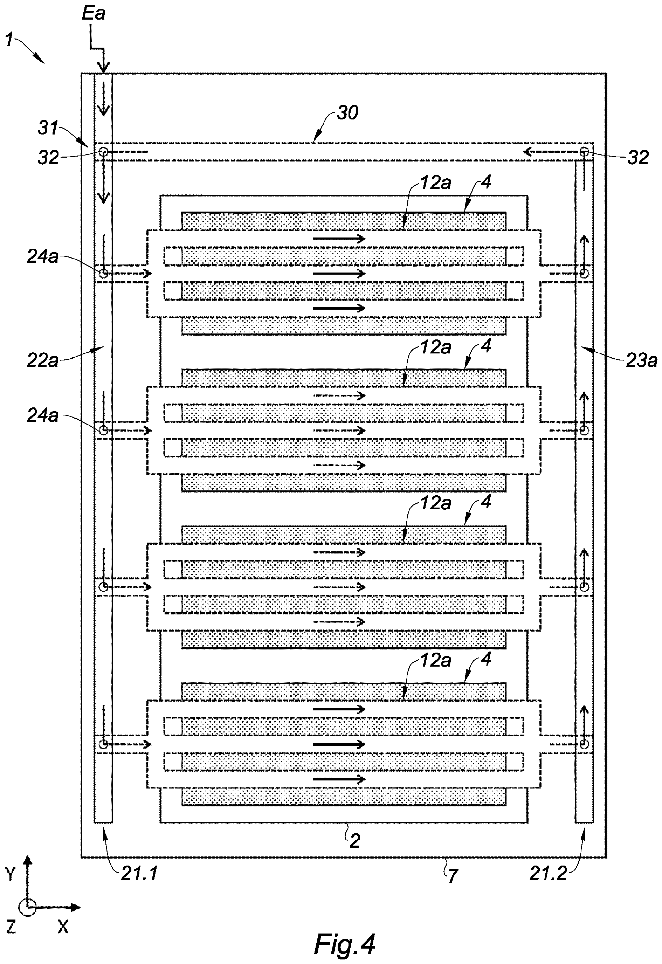

La figure 4 est une vue de dessus, schématique et partielle, d'une pile à combustible 1 selon un troisième mode de réalisation, qui diffère ici essentiellement du deuxième mode de réalisation en ce que les électrodes 4, 5 situées sur une même face de la membrane électrolytique 2 sont du même type, i.e. sont soit des anodes 4 soit des cathodes 5. Il n'y a donc pas d'alternance d'anodes 4 et de cathodes 5 sur une même face de la membrane électrolytique 2. En revanche, l'une des plaques de maintien 7, i.e. celle destinée à alimenter les réseaux fluidiques 12 en gaz combustible (ici en hydrogène) comporte un conduit de recirculation 30 disposé dans la partie interne 10.

La plaque de maintien 7 anodique comporte ainsi, dans sa partie interne 10, plusieurs réseaux fluidiques 12a adaptés à distribuer de l'hydrogène aux anodes 4. Les réseaux fluidiques 12a communiquent avec un même canal d'alimentation 22a d'hydrogène situé dans un premier compartiment 21.1 de la partie externe 20, et avec un même canal d'évacuation 23a situé dans le deuxième compartiment 21.2. Le canal d'alimentation 22a est relié au collecteur d'entrée d'hydrogène Ea, alors que le canal d'évacuation 23a n'est pas relié à un collecteur de sortie, mais à un conduit de recirculation 30. Celui-ci est identique à celui décrit en référence à la fig.3. Il est situé dans la partie interne 10, et relie le canal d'évacuation 23a au canal d'alimentation 22a. Aussi, chaque compartiment de la partie externe 20 d'une plaque de maintien 7 comporte un seul canal, soit d'alimentation, soit d'évacuation, et non pas deux canaux.

La plaque de maintien 7 cathodique comporte, dans sa partie interne 10, plusieurs réseaux fluidiques 12c adaptés à distribuer de l'oxygène aux cathodes 5. Les réseaux fluidiques 12c communiquent avec un même canal d'alimentation 22c en air situé dans un premier compartiment 21.1 de la partie externe 20, et avec un même canal d'évacuation 23c situé dans le deuxième compartiment 21.2. Le canal d'alimentation 22c est relié au collecteur d'entrée d'air Ec, et le canal d'évacuation 23c est relié à un collecteur de sortie Sc, et non pas à un conduit de recirculation 30.

Comme indiqué précédemment, le conduit de recirculation 30 peut, en variante, être disposé dans la partie externe 20 de la plaque de maintien 7, et ainsi connecter directement les canaux 22a et 23a. Un éjecteur 31 est présent entre le conduit de recirculation 30 et le canal d'alimentation 22a.

Des modes de réalisation particuliers viennent d'être décrits. Différentes variantes et modifications apparaîtront à l'homme du métier.

Ainsi, la pile à combustible 1 peut ne pas comporter d'alternance d'anodes 4 et de cathodes 5 sur une même face de la membrane électrolytique 2, mais seulement des anodes 4 sur une face et des cathodes 5 sur l'autre face, comme décrit dans le troisième mode de réalisation. Elle peut également ne pas comporter de conduit de recirculation 30 situé dans la plaque de maintien 7 anodique. Aussi, le canal d'évacuation 23 d'hydrogène est alors relié à un collecteur de sortie, et non pas à un conduit de recirculation 30.

## Revendications

1. Pile à combustible (1), destinée à être alimentée en fluides réactifs, comportant :
○ plusieurs cellules électrochimiques (3), coplanaires les unes aux autres, comportant :
• une même membrane électrolytique (2),
• des anodes (4) et cathodes (5), disposées de part et d'autre de la membrane électrolytique (2), distinctes d'une cellule électrochimique (3) à l'autre,
• deux mêmes plaques de maintien (7), disposées de part et d'autre de la membrane électrolytique (2) et au contact des électrodes (4, 5), comportant chacune :
- une partie dite interne (10), comportant :
■ une plaque isolante (11) dans laquelle sont formées différents réseaux fluidiques (12) comportant des canaux de distribution (13), chaque réseau fluidique (12) étant destiné à distribuer un fluide réactif à une anode (4) ou cathode (5),
○ les canaux de distribution (13) d'un même réseau fluidique (12) étant séparés deux à deux par une paroi longitudinale (14), les parois longitudinales (14) présentant chacune une face d'extrémité,
○ des portions conductrices de contact (16) s'étendant sur les faces d'extrémité et au contact d'une anode (4) ou cathode (5),
• chaque plaque de maintien (7) comportant en outre :
- une partie dite externe (20), disposée sur une face de la partie interne (10) opposée à la membrane électrolytique (2), comportant :
■ au moins deux compartiments (21), comportant chacun au moins un canal d'alimentation (22) ou d'évacuation (23) d'un fluide réactif communiquant avec les réseaux fluidiques (12) de la partie interne (10) correspondante destinés à distribuer ledit fluide réactif, lesdits compartiments (21) s'étendant de manière parallèle au plan de la membrane électrolytique (2) ;
• **caractérisée en ce qu'**une même plaque de maintien (7) comporte un conduit de recirculation (30) d'un fluide réactif combustible, communiquant avec le canal d'évacuation (23) situé dans un premier compartiment (21.1) de la partie externe (20) d'une part, et avec le canal d'alimentation (22) situé dans un deuxième compartiment (21.2) de la même partie externe (20) d'autre part.

2. Pile à combustible (1) selon la revendication 1, dans lequel :
○ les anodes (4) et les cathodes (5) sont agencées en alternance sur une même face de la membrane électrolytique (2) ;
○ chaque partie interne (10) comporte des réseaux fluidiques (12a) dits anodiques destinés à distribuer un fluide réactif combustible (H2), et des réseaux fluidiques (12c) dits cathodiques destinés à distribuer un fluide réactif comburant (02) ;
○ les compartiments (21) d'une même partie externe (20) comportent un canal d'alimentation (22a) et un canal d'évacuation (23a) du fluide réactif combustible en communication fluidique avec les réseaux fluidiques anodiques (12a), et un canal d'alimentation (22c) et un canal d'évacuation (23c) du fluide réactif comburant en communication fluidique avec les réseaux fluidiques cathodiques (12c).

3. Pile à combustible (1) selon la revendication 2, dans lequel chaque plaque de maintien (7) comporte, dans la partie externe (20), un premier compartiment (21.1) comportant un canal d'alimentation (22a) du fluide réactif combustible et un canal d'alimentation (22c) du fluide réactif comburant, et un deuxième compartiment (21.2) comportant un canal d'évacuation (23a) du fluide réactif combustible et un canal d'évacuation (23c) du fluide réactif comburant.

4. Pile à combustible (1) selon la revendication 2, dans lequel chaque plaque de maintien (7) comporte, dans la partie externe (20), un premier compartiment (21.1) comportant un canal d'alimentation (22a) du fluide réactif combustible et un canal d'évacuation (23c) du fluide réactif comburant, et un deuxième compartiment (21.2) comportant un canal d'évacuation (23a) du fluide réactif combustible et un canal d'alimentation (22c) du fluide réactif comburant.

5. Pile à combustible (1) selon l'une quelconque des revendications 2 à 4, dans lequel les canaux d'alimentation (22a, 22c) et/ou d'évacuation (23a, 23c) situés dans un même compartiment (21) d'une partie externe (20) s'étendent de manière parallèle l'un et l'autre, et sont séparés par une paroi de séparation (25) étanche aux fluides réactifs.

6. Pile à combustible (1) selon les revendications 4 et 5, dans lequel la paroi de séparation (25) séparant un canal d'alimentation (22a) du fluide réactif combustible du canal d'évacuation (23c) du fluide réactif comburant situés le premier compartiment (21.1) est une membrane permettant la diffusion de la vapeur d'eau.

7. Pile à combustible (1) selon la revendication 1, dans lequel :
○ les anodes (4) sont agencées sur une même face de la membrane électrolytique (2), et les cathodes (5) sont agencées sur la face opposée ;
○ une partie interne (10) d'une même plaque de maintien (7) comporte uniquement des réseaux fluidiques (12a) dits anodiques destinés à distribuer un fluide réactif combustible, et la partie interne (10) de l'autre plaque de maintien (7) comporte uniquement des réseaux fluidiques (12c) dits cathodiques destinés à distribuer un fluide réactif comburant ;
○ les compartiments (21) d'une même partie externe (20) comportent un canal d'alimentation (22a) et un canal d'évacuation (23a) du fluide réactif combustible en communication fluidique avec les réseaux fluidiques anodiques (12a), et les compartiments (21) de la partie externe (20) de l'autre plaque de maintien (7) comportent un canal d'alimentation (22c) et un canal d'évacuation (23c) du fluide réactif comburant en communication fluidique avec les réseaux fluidiques cathodiques (12c).

8. Pile à combustible (1) selon l'une quelconque des revendications 1 à 7, dans lequel le canal d'alimentation (22a) en le fluide réactif combustible et le conduit de recirculation (30) sont raccordés fluidiquement par un éjecteur (31) à effet Venturi.

9. Pile à combustible (1) selon la revendication 8, dans lequel le canal d'alimentation (22a) présente une section de passage S₁ en amont et aval de l'éjecteur (31), et présente une section de passage Sₑ dans l'éjecteur (31) inférieure à Si, et le conduit de recirculation (30) est raccordé au canal d'alimentation (22a) par un orifice de recirculation (32) présentant une section de passage Sᵣ inférieure à Sₑ.

10. Pile à combustible (1) selon l'une quelconque des revendications 1 à 9, dans lequel le conduit de recirculation (30) est situé dans la partie interne (10) ou dans la partie externe (20) de la plaque de maintien (7).

11. Pile à combustible (1) selon l'une quelconque des revendications 1 à 10, dans lequel, dans une même plaque de maintien (7), la partie externe (20) est une partie rapportée et assemblée à la partie interne (10) de manière étanche.

12. Pile à combustible (1) selon l'une quelconque des revendications 1 à 10, dans lequel, dans une même plaque de maintien (7), la partie externe (20) est au moins en partie réalisée d'un seul tenant avec la plaque isolante (11) de la partie interne (10).

13. Pile à combustible (1) selon l'une quelconque des revendications 1 à 12, dans lequel les deux compartiments (21.1, 21.2) d'une même plaque de maintien (7) sont disposés de part et d'autre des réseaux fluidiques (12), suivant l'axe longitudinal de ces derniers.

14. Pile à combustible (1) selon l'une quelconque des revendications 1 à 13, dans lequel la partie interne (10) de chaque plaque de maintien (7) comporte en outre des vias conducteurs (18) s'étendant au travers de la plaque isolante (11), connectés aux portions conductrices de contact (16) d'une part, et à des pistes conductrices de polarisation (17) adaptées à appliquer un potentiel électrique aux électrodes (4, 5), lesdites pistes conductrices de polarisation (17) s'étendant sur une face d'une plaque de maintien (7) opposée à la membrane électrolytique (2).

## Patentansprüche

1. Brennstoffzelle (1), die dazu bestimmt ist, mit reaktiven Fluiden versorgt zu werden, aufweisend:
o mehrere elektrochemische Zellen (3), die zueinander komplanar sind, aufweisend:
• eine selbe elektrolytische Membran (2),
• Anoden (4) und Kathoden (5), die beiderseits der elektrolytischen Membran (2) angeordnet sind, die sich von einer elektrochemischen Zelle (3) zur anderen unterscheiden,
• zwei gleiche Halteplatten (7), die beiderseits der elektrolytischen Membran (2) und in Kontakt mit den Elektroden (4, 5) angeordnet sind, jeweils aufweisend:
- einen Innenabschnitt (10), aufweisend:
▪ eine Isolierplatte (11), in welcher verschiedene Fluidnetze (12) ausgebildet sind, die Verteilkanäle (13) aufweisen, wobei jedes Fluidnetz (12) dazu bestimmt ist, ein reaktives Fluid an eine Anode (4) oder Kathode (5) zu verteilen,
o wobei die Verteilkanäle (13) eines selben Fluidnetzes (12) paarweise durch eine Längswand (14) getrennt sind, wobei die Längswände (14) jeweils eine Endfläche aufweisen,
o wobei sich leitende Kontaktabschnitte (16) auf den Endflächen und in Kontakt mit einer Anode (4) oder Kathode (5) erstrecken,
• wobei jede Halteplatte (7) ferner Folgendes aufweist:
- einen Außenabschnitt (20), der auf einer Fläche des Innenabschnitts (10) angeordnet ist, die der elektrolytischen Membran (2) gegenüberliegt, aufweisend:
▪ mindestens zwei Kammern (21), die jeweils mindestens einen Kanal zur Zuleitung (22) oder Ableitung (23) eines reaktiven Fluids aufweisen, die mit den Fluidnetzen (12) des entsprechenden Innenabschnitts (10) in Verbindung stehen, die dazu bestimmt sind, das reaktive Fluid zu verteilen, wobei sich die Kammern (21) parallel zur Ebene der elektrolytischen Membran (2) erstrecken;
• **dadurch gekennzeichnet, dass** eine selbe Halteplatte (7) eine Leitung zur Rückführung (30) eines brennbaren reaktiven Fluids aufweist, die einerseits mit dem Ableitungskanal (23), der sich in einer ersten Kammer (21.1) des Außenabschnitts (20) befindet, und andererseits mit dem Zuleitungskanal (22), der sich in einer zweiten Kammer (21.2) desselben Außenabschnitts (20) befindet, in Verbindung steht.

2. Brennstoffzelle (1) nach Anspruch 1, wobei:
o die Anoden (4) und Kathoden (5) abwechselnd auf einer selben Fläche der elektrolytischen Membran (2) angeordnet sind;
o jeder Innenabschnitt (10) anodische Fluidnetze (12a), die dazu bestimmt sind, ein brennbares reaktives Fluid (H₂) zu verteilen, und kathodische Fluidnetze (12c), die dazu bestimmt sind, ein brandförderndes reaktives Fluid (₂) zu verteilen, aufweist;
o die Kammern (21) eines selben Außenabschnitts (20) einen Kanal zur Zuleitung (22a) und einen Kanal zur Ableitung (23a) des brennbaren reaktiven Fluids aufweisen, die mit den anodischen Fluidnetzen (12a) in Fluidverbindung stehen, und einen Kanal zur Zuleitung (22c) und einen Kanal zur Ableitung (23c) des brandfördernden reaktiven Fluids aufweisen, die mit den kathodischen Fluidnetzen (12c) in Fluidverbindung stehen.

3. Brennstoffzelle (1) nach Anspruch 2, wobei jede Halteplatte (7) im Außenabschnitt (20) eine erste Kammer (21.1) mit einem Kanal zur Zuleitung (22a) des brennbaren reaktiven Fluids und einem Kanal zur Zuleitung (22c) des brandfördernden reaktiven Fluids und eine zweite Kammer (21.2) mit einem Kanal zur Ableitung (23a) des brennbaren reaktiven Fluids und einem Kanal zur Ableitung (23c) des brandfördernden reaktiven Fluids aufweist.

4. Brennstoffzelle (1) nach Anspruch 2, wobei jede Halteplatte (7) im Außenabschnitt (20) eine erste Kammer (21.1) mit einem Kanal zur Zuleitung (22a) des brennbaren reaktiven Fluids und einem Kanal zur Ableitung (23c) des brandfördernden reaktiven Fluids und eine zweite Kammer (21.2) mit einem Kanal zur Ableitung (23a) des brennbaren reaktiven Fluids und einem Kanal zur Zuleitung (22c) des brandfördernden reaktiven Fluids aufweist.

5. Brennstoffzelle (1) nach einem der Ansprüche 2 bis 4, wobei die sich die Zuleitungs- (22a, 22c) und/oder Ableitungskanäle (23a, 23c), die sich in einer selben Kammer (21) eines Außenabschnitts (20) befinden, parallel zueinander erstrecken und durch eine Trennwand (25) getrennt sind, die für reaktive Fluide undurchlässig ist.

6. Brennstoffzelle (1) nach den Ansprüchen 4 und 5, wobei die Trennwand (25), die den Kanal zur Zuleitung (22a) des brennbaren reaktiven Fluids vom Kanal zur Ableitung (23c) des brandfördernden reaktiven Fluids trennt, die sich in der ersten Kammer (21.1) befinden, eine Membran ist, die die Diffusion des Wasserdampfs ermöglicht.

7. Brennstoffzelle (1) nach Anspruch 1, wobei:
o die Anoden (4) auf einer selben Fläche der elektrolytischen Membran (2) und die Kathoden (5) auf der Seite gegenüber angeordnet sind;
o ein Innenabschnitt (10) einer selben Halteplatte (7) nur anodische Fluidnetze (12a) aufweist, die dazu bestimmt sind, ein brennbares reaktives Fluid zu verteilen, und der Innenabschnitt (10) der anderen Halteplatte (7) nur kathodische Fluidnetze (12c) aufweist, die dazu bestimmt sind, ein brandförderndes reaktives Fluid zu verteilen;
o die Kammern (21) eines selben Außenabschnitts (20) einen Kanal zur Zuleitung (22a) und einen Kanal zur Ableitung (23a) des brennbaren reaktiven Fluids aufweisen, die mit den anodischen Fluidnetzen (12a) in Fluidverbindung stehen, und die Kammern (21) des Außenabschnitts (20) der anderen Halteplatte (7) einen Kanal zur Zuleitung (22c) und einen Kanal zur Ableitung (23c) des brandfördernden reaktiven Fluids aufweisen, die mit den kathodischen Fluidnetzen (12c) in Fluidverbindung stehen.

8. Brennstoffzelle (1) nach einem der Ansprüche 1 bis 7, wobei der Kanal zur Zuleitung (22a) des brennbaren reaktiven Fluids und die Rückführungsleitung (30) durch einen Venturi-Effekt-Ejektor (31) fluidisch verbunden sind.

9. Brennstoffzelle (1) nach Anspruch 8, wobei der Zuleitungskanal (22a) einen Durchgangsquerschnitt S1 stromauf und stromab des Ejektors (31) aufweist und einen Durchgangsquerschnitt Sₑ im Ejektor (31) aufweist, der niedriger als S1 ist, und die Rückführungsleitung (30) mit dem Zuleitungskanal (22a) über eine Rückführungsöffnung (32) verbunden ist, die einen Durchgangsquerschnitt Sᵣ aufweist, der niedriger als Sₑ ist.

10. Brennstoffzelle (1) nach einem der Ansprüche 1 bis 9, wobei sich die Rückführungsleitung (30) im Innenabschnitt (10) oder im Außenabschnitt (20) der Halteplatte (7) befindet.

11. Brennstoffzelle (1) nach einem der Ansprüche 1 bis 10, wobei in einer selben Halteplatte (7) der Außenabschnitt (20) ein Abschnitt ist, der an den Innenabschnitt (10) dicht angesetzt und angefügt ist.

12. Brennstoffzelle (1) nach einem der Ansprüche 1 bis 10, wobei in einer selben Halteplatte (7) der Außenabschnitt (20) wenigstens teilweise einstückig mit der Isolierplatte (11) des Innenabschnitts (10) ausgebildet ist.

13. Brennstoffzelle (1) nach einem der Ansprüche 1 bis 12, wobei die zwei Kammern (21.1, 21.2) einer selben Halteplatte (7) beiderseits der Fluidnetze (12) entlang der Längsachse letzterer angeordnet sind.

14. Brennstoffzelle (1) nach einem der Ansprüche 1 bis 13, wobei der Innenabschnitt (10) jeder Halteplatte (7) ferner leitende Durchkontaktierungen (18) aufweist, die sich durch die Isolierplatte (11) erstrecken, die mit den leitenden Kontaktabschnitten (16) einerseits und mit Polarisierungsleiterbahnen (17) verbunden sind, die geeignet sind, ein elektrisches Potential an die Elektroden (4, 5) anzulegen, wobei sich die Polarisierungsleiterbahnen (17) auf einer Fläche einer Halteplatte (7) erstrecken, die der elektrolytischen Membran (2) gegenüberliegt.

## Claims

1. Fuel cell (1), intended to be fed with reactive fluids, comprising:
○ a plurality of electrochemical cells (3), coplanar with one another, comprising:
• one same electrolytic membrane (2),
• anodes (4) and cathodes (5), arranged on either side of the electrolytic membrane (2), distinct from one electrochemical cell (3) to the other,
• two same holding plates (7), arranged on either side of the electrolytic membrane (2) and in contact with the electrodes (4, 5), each comprising:
- a part referred to as internal (10), comprising:
■ an insulating plate (11) in which are formed various fluidic networks (12) comprising distribution channels (13), each fluidic network (12) being intended to distribute a reactive fluid to an anode (4) or cathode (5),
○ the distribution channels (13) of one same fluidic network (12) being separated pairwise by a longitudinal wall (14), the longitudinal walls (14) each having an end face,
○ conductive contact portions (16) extending over the end faces and in contact with an anode (4) or cathode (5),
• each holding plate (7) further comprising:
- a part referred to as external (20), arranged on one face of the internal part (10) opposite the electrolytic membrane (2), comprising:
■ at least two compartments (21), each comprising at least one feed channel (22) or discharge channel (23) for a reactive fluid communicating with the fluidic networks (12) of the corresponding internal part (10) which are intended to distribute said reactive fluid, said compartments (21) extending parallel to the plane of the electrolytic membrane (2);
• **characterized in that** one same holding plate (7) comprises a recirculation duct (30) for a fuel reactive fluid, communicating with the discharge channel (23) located in a first compartment (21.1) of the external part (20) on the one hand, and with the feed channel (22) located in a second compartment (21.2) of the same external part (20) on the other hand.

2. Fuel cell (1) according to Claim 1, wherein:
○ the anodes (4) and the cathodes (5) are arranged alternately on one same face of the electrolytic membrane (2);
○ each internal part (10) comprises what are referred to as anodic fluidic networks (12a) that are intended to distribute a fuel reactive fluid (H₂), and what are referred to as cathodic fluidic networks (12c) that are intended to distribute an oxidizer reactive fluid (O₂);
○ the compartments (21) of one same external part (20) comprise a feed channel (22a) and a discharge channel (23a) for the fuel reactive fluid in fluidic communication with the anodic fluidic networks (12a), and a feed channel (22c) and a discharge channel (23c) for the oxidizer reactive fluid in fluidic communication with the cathodic fluidic networks (12C).

3. Fuel cell (1) according to Claim 2, in which each holding plate (7) comprises, in the external part (20), a first compartment (21.1) comprising a feed channel (22a) for the fuel reactive fluid and a feed channel (22c) for the oxidizer reactive fluid, and a second compartment (21.2) comprising a discharge channel (23a) for the fuel reactive fluid and a discharge channel (23c) for the oxidizer reactive fluid.

4. Fuel cell (1) according to Claim 2, wherein each holding plate (7) comprises, in the external part (20), a first compartment (21.1) comprising a feed channel (22a) for the fuel reactive fluid and a discharge channel (23c) for the oxidizer reactive fluid, and a second compartment (21.2) comprising a discharge channel (23a) for the fuel reactive fluid and a feed channel (22c) for the oxidizer reactive fluid.

5. Fuel cell (1) according to any one of Claims 2 to 4, in which the feed (22a, 22c) and/or discharge (23a, 23c) channels located in one same compartment (21) of an external part (20) extend parallel to one another, and are separated by a separating wall (25) that is impermeable to the reactive fluids.

6. Fuel cell (1) according to Claims 4 and 5, in which the separating wall (25) separating a feed channel (22a) for the fuel reactive fluid from the discharge channel (23c) for the oxidizer reactive fluid that are located in the first compartment (21.1) is a membrane allowing the diffusion of water vapour.

7. Fuel cell (1) according to Claim 1, wherein:
○ the anodes (4) are arranged on one same face of the electrolytic membrane (2), and the cathodes (5) are arranged on the opposite face;
○ an internal part (10) of one same holding plate (7) comprises only what are referred to as anodic fluidic networks (12a) that are intended to distribute a fuel reactive fluid, and the internal part (10) of the other holding plate (7) comprises only what are referred to as cathodic fluidic networks (12c) that are intended to distribute an oxidizer reactive fluid;
○ the compartments (21) of one same external part (20) comprise a feed channel (22a) and a discharge channel (23a) for the fuel reactive fluid in fluidic communication with the anodic fluidic networks (12a), and the compartments (21) of the external part (20) of the other holding plate (7) comprise a feed channel (22c) and a discharge channel (23c) for the oxidizer reactive fluid in fluidic communication with the cathodic fluidic networks (12c).

8. Fuel cell (1) according to any one of Claims 1 to 7, wherein the feed channel (22a) for the fuel reactive fluid and the recirculation duct (30) are fluidically connected by a Venturi effect ejector (31).

9. Fuel cell (1) according to Claim 8, wherein the feed channel (22a) has a passage section S₁ upstream and downstream of the ejector (31), and has a passage section Sₑ in the ejector (31) that is smaller than S₁, and the recirculation duct (30) is connected to the feed channel (22a) by a recirculation orifice (32) that has a passage section Sᵣ smaller than Se.

10. Fuel cell (1) according to any one of Claims 1 to 9, wherein the recirculation duct (30) is located in the internal part (10) or in the external part (20) of the holding plate (7).

11. Fuel cell (1) according to any one of Claims 1 to 10, wherein, in one same holding plate (7), the external part (20) is a part added and joined to the internal part (10) in a sealtight manner.

12. Fuel cell (1) according to any one of Claims 1 to 10, wherein, in one same holding plate (7), the external part (20) is at least partly made as one piece with the insulating plate (11) of the internal part (10).

13. Fuel cell (1) according to any one of Claims 1 to 12, wherein the two compartments (21.1, 21.2) of one same holding plate (7) are arranged on either side of the fluidic networks (12), along the longitudinal axis of these latter.

14. Fuel cell (1) according to any one of Claims 1 to 13, wherein the internal part (10) of each holding plate (7) further comprises conductive vias (18) extending through the insulating plate (11), which are connected to the conductive contact portions (16) on the one hand, and to conductive biasing tracks (17) suitable for applying an electrical potential to the electrodes (4, 5), said conductive biasing tracks (17) extending over one face of a holding plate (7) opposite the electrolytic membrane (2).
